# EUROPEAN PATENT APPLICATION

(11) **EP 4 649 833 A1**
(43) Date of publication of application: **19.11.2025**
(21) Application number: 24176050.3
(22) Date of filing: 15.05.2024
(51) Int. Cl.: A23J 3/14, A23J 3/22, A23J 3/26, A23P 30/20, B29C 48/05, B29C 48/25

(54) **PROTEIN STRUCTURING MODULE, ARRANGEMENT AND METHOD FOR PROVIDING A STRUCTURED PROTEIN SUBSTANCE FOR MANUFACTURING OF A FOOD PRODUCT**

(71) Applicant: Nederlandse Organisatie voor toegepast-natuurwetenschappelijk Onderzoek TNO, 2595 DA 's-Gravenhage (NL)
(72) Inventor: VAN BOMMEL, Kjeld, Jacobus Cornelis, 2595 DA 's-Gravenhage (NL); RIJFERS, Andries, 2595 DA 's-Gravenhage (NL); HOPPENBROUWERS, Marcus Benedictus, 2595 DA 's-Gravenhage (NL)
(74) Representative: V.O.

(57) **Abstract**

The present document relates to a protein structuring module for a providing arrangement for manufacturing of a food product, using a protein constituent. The module establishes a shear stress for aligning molecules of the protein constituent, by including a first and a second solid part. The first solid parts are detachably connected to each other along their contact surfaces, and at least one of said contact surfaces includes a groove running across the surface. Together, as connected, the groove in the contact surfaces of the connected first and second solid parts define a shear channel of the cell having a first open end and a second open end. The open ends define an inlet and an outlet for conveying the structured protein substance.

## Description

### Field of the invention

The present invention is directed at a protein structuring module for use in an arrangement for structuring a protein constituent and subsequently providing a structured protein substance for manufacturing of a food product, wherein the structured protein substance includes a structured protein material.

### Background

The demand for meat substitutes has been steadily increasing over the past decennia, driven by a growing interest in vegetarian products and more environmentally friendly alternatives to meat. With an ever-growing population, a shift towards a more plant-based diet is needed. Consumers report willingness to eat plant-based foods, but also ask for higher quality products.

Various methods of processing protein materials to form meat and fish substitutes are known and applied in industry. One of these methods is for example provided by two counterrotating, concentric cylinders or cones, together forming a Couette cell. A non-structured protein constituent residing in the gap between the two cylinders is subjected to heat, which makes the protein material unfold. The protein constituent is further subjected to shear stress from the counterrotating drums, which aligns the protein molecules. Although this process allows for the production of a product that mimics meat-like structures from plant-based proteins, such as soy proteins, various disadvantages are attached. For example, the product can only be produced in batches, which - although this may be automated - is labor-intensive in an industrial setting. After each batch, the processed protein materials have to be removed from the cell and replaced with a new batch of unprocessed protein constituent. Another disadvantage is that the method can only produce slabs of limited thickness. Moreover, this process always produces slabs with a homogeneous composition.

Other methods of processing protein constituents to form meat substitutes include the use of single screw or double screw extruders, in which protein constituents are simultaneously subjected to heat and shear stress while being driven through a barrel. These methods provide the advantage of enabling continuous production of the meat substitute to be manufactured. The material may be printed into arbitrary shapes. However, a disadvantage is that the components involved in these methods are difficult to clean . This likewise hampers the industrialization of the process. Also, this process always produces a thick filament extrusion in a "sausage-like" shape. This extruded material then likewise has a homogeneous composition.

### Summary of the invention

It is an object of the present invention to provide a protein structuring module and arrangement for providing a structured protein substance for manufacturing of a food product, and a method of manufacturing thereof, which overcome these limitations and provide for an industrialisable process that can be properly maintained and has the potential of being scalable.

To this end, in accordance with a first aspect of the invention, there is provided herewith a protein structuring module for use in an arrangement for providing a structured protein substance for manufacturing of a food product, wherein the module comprises an inlet for receiving a protein constituent, an outlet for providing a structured protein substance including a structured protein material, and a conduit between the inlet and the outlet of the protein structuring module, wherein the protein structuring module is configured for establishing a shear stress in the protein constituent for unfolding and/or aligning molecules of the protein constituent, such as to form said structured protein material, wherein at least a part of the conduit is formed by a first shear channel, the protein structuring module therefore comprising a first solid part and a second solid part, wherein the first solid part and second solid part are detachably connected to each other along at least one contact surface of the first solid part and at least one contact surface of the second solid part,
wherein at least one of said contact surfaces of either the first and the second solid part comprises a groove running across the at least one contact surfaces, such that the contact surfaces of the connected first and second solid parts define the first shear channel running along the groove between the two contact surfaces, the first shear channel having a first open end and a second open end, wherein at least one of the first and second open ends of the first shear channel define at least one of the inlet and the outlet of the protein structuring module.

The protein constituent, prior to being subjected to shear stresses in a shear channel, typically has a soft, cohesive composition reminiscent of a paste or dough. It may also enter a viscous, liquid state, particularly when it is also subjected to heating. In this unstructured state, the molecules of the protein constituent are folded in a globular state and randomly oriented. By subjecting the protein constituent to shear stresses in the shear channel, the molecules are transformed into a more unfolded and aligned state. Subjecting the constituent to these shear stresses thus results in a more structured protein material.

The two solid parts can be firmly attached to each other along the contact surfaces, which are typically much larger than the grooves that define the channel when the solid parts are detachably connected. The two solid parts thereby form an envelope for the shear channel through which in use the protein constituent may be conveyed. The solid parts may for example be configured to be detachably connectable using screws, clamps, or sliding dovetails. In this way, a pressure buildup will not result in the two solid parts being pushed apart from one another. The invention therefore also allows the shear channel to sustain high pressures, which are the result of the high temperatures needed to mobilize and unfold the protein molecules. The protein substance, which is at high pressure at the inlet, will be pushed through the long shear channel at significant force, in accordance with some embodiments of the invention, which are discussed below.

An important further advantage is that a channel of this protein structuring module can easily be cleaned along its length when the first and second solid parts are detached. This is because in a detached state, the full channel is exposed as one or more grooves running along a contact surface and is thus easily accessible for cleaning, since no further depth has to be reached for this purpose than the depth of the groove.

A further advantage is that a channel can be defined with a high degree of freedom, because a groove may run along any desired path across a contact surface. In other words, a channel can be specifically made in accordance with specific requirements for e.g. the residence time, because the longer a channel path is, the longer the protein constituent will take to pass through the shear channel. Alternatively, a groove can have a thickness that varies along its length. This will affect the flow parameters of the substance passing through the shear channel along its length. As may be appreciated, of the shear channel, length may also be varied. The thickness may for example be varied by varying the diameter, width, or depth of the groove. Furthermore, shape of the groove could also be varied: a circular, square, starshaped, etcetera. However, shape freedom in practice is limited by cleanability requirements and by the fact that the shape has to be cut out in one side of the cylinder

Furthermore, the protein structuring module can easily be adapted to changes in the protein structuring process, by exchanging solid parts that contain grooves with differing widths, thicknesses or lengths, for defining a shear channel that will subject the protein material to different shear stresses and for different amounts of time. In this manner, protein substances can be provided with more finely tuned properties according to the flow parameters and/or the parameters of the shear channel. These exchanges can easily and quickly be done without reducing or changing the capabilities of the protein structuring module as a whole.

In accordance with some embodiments of the invention, at least one contact surface may contain one or more additional grooves, each additional groove running across the at least one of said contact surfaces, such that the two contact surfaces of the attached solid parts define one or more separate, additional shear channels of the protein structuring module, separate from the first shear channel. In these embodiments, the additional grooves define additional channels of the protein structuring module in a similar manner as the first shear channel. Since there are still only two solid parts, each of these shear channels enjoys the same advantages as the first channel, but they further provide the invention with the potential for scalability, because multiple channels can be used for the processing of protein constituents simultaneously, without increasing the size of the protein structuring module. This allows the module to be kept compact. Furthermore, since all of the shear channels of the module are defined by the grooves running along the contact surfaces of the solid parts, all of the channels can be easily cleaned in a short period of time, because all of the grooves simultaneously are exposed and directly accessible for cleaning.

In accordance with some embodiments of the invention, each additional shear channel of the protein structuring module comprises a further first open end, wherein each further first open end of each shear channel defines a further inlet of the module. In these embodiments, each shear channel of the protein structuring module has its own inlet. This allows the protein structuring module to be provided with multiple strands of protein constituent in parallel, thereby providing the device with scalability.

Furthermore, at least one of said one or more additional grooves can branch off from another one of said grooves, such that the grooves together share a first open end defining one of the at least one of the inlet and the outlet of the module. In such configurations, the protein constituent is processed in each branched off path according to the local parameters of the shear channel. These parameters may differ between branches, enabling the protein material to be subjected to a variety of flow parameters.

In accordance with some embodiments of the invention, each additional shear channel comprises a further second open end, wherein each further second open end of each shear channel defines a further outlet of the module. This has the advantage that multiple strands of structured protein substance can be provided by the protein structuring module in parallel. The outlets of the protein structuring module can each be located at a desired location on the exterior of the protein structuring module, by defining the groove corresponding to that channel to end at that location. This provides the invention with a degree of freedom. In this way, possible constraints on the dimensions of the module may be partly released when used in a larger system, because inlets and outlets of a module may be located at any desired location on the solid parts.

Furthermore, at least one of said one or more additional grooves can branch with another one of said grooves, such that the grooves together share a second open end defining one of the at least one of the inlet and the outlet of the module. In other words, two separate shear channels of the protein structuring module combine to form a single shear channel further downstream, leading to a single, shared outlet of the protein structuring module. This allows for an increased complexity of processed protein substances, as channels with different size parameters, such as width and length, subject the protein constituent passing through them to different shear stresses and for different amounts of time. These channels can merge to bring these differentially affected substances together, resulting in a mixture of protein substances with different properties.

In accordance with some embodiments of the invention, at least two of the outlets of the protein structuring module are located adjacent to each other on the module, such that the strands of structured protein substances provided by the adjacent protein material outlets form a slab of protein substance. This has the advantage of allowing the protein substance to be provided in a slab-like shape, which can often be more desirable than a strand-like shape, such as would be provided through a single outlet, especially when producing meat substitute products at a larger scale. In this way, the protein structuring process can be scaled up significantly, while still using a single module with the same spatial dimensions. Also, this allows a slab-shaped protein substance to be provided while keeping the strand-providing shear channels, which subject the protein constituent to more suitable flow parameters for structuring by the protein structuring module. A slab-shaped channel with a slit-shaped outlet for example would allow a less even velocity profile to develop in the protein constituent.

In accordance with some embodiments of the invention, the contact surface of the first solid part defines an interior wall of a cavity. This cavity is accessible through a reception opening for enabling the second solid part to be inserted into the cavity. Furthermore, the contact surface of the second solid part forms an exterior surface thereof, and the contact surfaces of the first and second solid parts are correspondingly shaped such as to be contiguous to each other when the first and second solid parts are detachably connected.

In these embodiments, the second solid part is enveloped by the first solid part. This provides a further improved ability of the module to sustain high pressures, because in this case the pressure is uniform along the channels and across the contact surface of the first solid part. Also, the pressure is oriented in the direction of the outer wall, such that the second solid part will not experience a force pushing it out of the cavity. A further advantage is that the length of the shear channels in these embodiments can be defined within a smaller volumetric space than they could be using flat contact surfaces with equivalent surface areas. These embodiments therefore improve the scalability of the invention.

In accordance with some embodiments of the invention, the contact surfaces of the first and second solid parts form at least one of a group comprising: concentric cylindrical surfaces, spherical surfaces, and polynomial surfaces.

In the embodiments where the contact surfaces of the first and second solid parts form concentric cylindrical surfaces or spherical surfaces, the solid parts can easily be turned with respect to each other to align the grooves with the inlets and outlets of the module. On the other hand, in embodiments where the contact surfaces of the first and second solid parts form polynomial surfaces, the solid parts can only be attached in a specific orientation, such that the grooves will always be aligned with the inlets and outlets of the module.

In accordance with some embodiments of the invention, at least one of the first and second solid part comprises one or more recesses for enabling insertion of one or more heating means for heating the protein material. These recesses may either be through-holes or blind holes in the first or second solid part, such as to provide a degree of freedom in the choice of heating means for insertion in the recesses. Examples of these heating means include a heating rod, a high temperature fluid, surface heating, and heat spreaders.

Heating of the protein material helps unfold the molecules of the protein material and increases the pressures at the inlet, which causes the material to be pushed through the shear channel and be subject to shear stress. The shear stress causes the protein molecules to align to a sufficient extent, in order to provide the desired structure of the substance at the outlet.

In accordance with some embodiments of the invention, at least one of the first and second solid part comprises one or more recesses for enabling insertion of one or more heating or cooling means for heating or cooling the protein material. These recesses may either be through-holes or blind holes in the first or second solid part, such as to provide a degree of freedom in the choice of cooling means for insertion in the recesses. Examples of such a cooling means include a cooling fluid and a Peltier element. Once a desired composition of a structured protein substance is reached, the substance may be brought down to lower temperatures. This prevents further, unwanted processing of the substance and makes the substance ready for subsequent steps in the manufacturing process of a food product.

In accordance with some embodiments of the invention, said recesses are located on the one or more contact surfaces, such that the heating or cooling means has a distance from the shear channels that is uniform along the length of each shear channel. In this way the protein material in the shear channels can be uniformly heated or cooled.

In accordance with some embodiments of the invention, the protein structuring module further comprises a heat conduction part, the heat conduction part being detachably connected to the first solid part along at least one further contact surface of the first solid part, the further contact surface forming an exterior surface thereof, and at least one contact surface of the heat conduction part, the at least one contact surface forming an interior surface thereof, and wherein the further contact surface of the first solid part and the at least one contact surface of the heat conduction part are correspondingly shaped such as to be contiguous to each other when the first solid part and heat conduction part are detachably connected, wherein the heat conduction part comprises one or more recesses for enabling insertion into each of said recesses of either: a heating means for heating the protein constituent, or a cooling means for cooling the protein constituent.

It may provide further advantage to the invention to place the heating or cooling means externally to the two solid parts, for example using a heat conduction part. An exterior placement of the heating or cooling means may facilitate more rapid heat transfer between the protein constituent and the heating or cooling means.

In accordance with some embodiments of the invention, the interior wall comprises a protruding element at the reception opening for forming an internal screw thread. In these embodiments, either the first open end is provided at the interior wall in the extended direction from the reception opening to the protruding element and the second open end is provided at the exterior surface; or the first open end is provided at the exterior surface and the second open end is provided at the interior wall in the extended direction from the reception opening to the protruding element. Furthermore, the groove is provided across the exterior surface, such as to run along a spiraling path for forming an external screw thread complementary to the internal screw thread, such as to enable the second solid part to be at least partially inserted into the cavity by means of a screwing motion. Advantageously, these embodiments have shear channels with adjustable path lengths. It may be preferred in some cases for a protein constituent to be subjected to unfolding and aligning of protein molecules for a shorter period of time than would be possible given the dimensions of the module and the corresponding full length of the shear channels. These embodiments allow the second solid part to be only partially screwed into the first solid part, such that in use, a shear channel will be formed from only a portion of the interior wall of the first solid part and only a portion of the exterior surface of the second solid part, which are contiguous to each other. This is achieved while keeping the module fully functional and advantageously provides further freedom in defining the shear channels. The internal screw thread between the reception opening of the first solid part and the open end that is provided to the first solid part forces the protein constituent to flow between the first open end and the second open end and prevents it from leaking out of the module through the reception opening.

In accordance with a second aspect of the invention, there is provided herewith an arrangement for providing a structured protein substance for manufacturing a food product, wherein the structured protein substance includes a structured protein material, the arrangement comprising a protein structuring module, wherein the protein structuring module comprises a first solid part and a second solid part, wherein the first solid part and second solid part are detachably connected to each other along at least one contact surface of the first solid part and at least one contact surface of the second solid part, wherein at least one of said contact surfaces of either the first and the second solid part comprises a groove running across the at least one contact surfaces, such that the contact surfaces of the connected first and second solid parts define a first shear channel running along the groove between the two contact surfaces, the first shear channel having a first open end and a second open end, wherein at least one of the first and second open ends of the first shear channel defines at least one of the inlet and the outlet of the protein structuring module. The application of the above described protein structuring module in accordance with the first aspect in the above arrangement, in accordance with the second aspect, provides a scalable arrangement with the potential to apply the meat substitute production process in an industrial setting. This, amongst others, is due to the possibility to include multiple channels in the module; due to the fact that it is highly modular; due to the fact that it can easily be adapted to changes in the process; and due to the fact that it can easily and quickly be cleaned.

In accordance with some embodiments of the invention, the arrangement comprises a plurality of *N* protein structuring modules, *N* being an integer greater than 1, wherein the protein structuring modules are connected in sequence, such that for each *n* greater than 1 and up to *N,* each inlet of the *n*^{th} protein structuring module is connected to a single outlet of an upstream module. In this way, protein structuring modules can be sequentially connected to protein structuring modules with different characteristics, such as the number of protein material inlets or protein material outlets, or the lengths and thicknesses of the shear channels inside the protein structuring modules. This feature of the invention allows for a high degree of freedom in configuring the arrangement, and also a high degree of achievable complexity of the processed structured protein substance, as a protein constituent passing through different channels with differing widths and lengths can be separated and recombined through branching shear channels, each of which can subject the protein constituent to different shear stresses for different amounts of time.

In accordance with a third aspect of the invention, there is provided herewith a method of manufacturing a protein structuring module in accordance with the first aspect of the invention, for providing a structured protein substance for manufacturing of a food product, wherein the structured protein substance includes a structured protein material. The method comprises providing a first solid part and a second solid part, wherein the first solid part and second solid part can be detachably connected to each other along at least one contact surface of the first solid part and at least one contact surface of the second solid part. The method further comprises providing at least one of said contact surfaces of either the first and the second solid part with a groove running across the at least one contact surfaces, such that the contact surfaces of the connected first and second solid parts define a first shear channel of the cell, having a first open end and a second open end, running along the groove between the two contact surfaces, wherein the first and second open ends of the shear channel define an inlet and an outlet of said first shear channel. The method further comprises detachably connecting the first and second solid parts along the at least one contact surface of the first solid part and the at least one contact surface of the second solid part.

Means of detachably connecting the two solid parts can for example include screws, clamps, or sliding dovetails. Advantageously, this method provides an easy way of assembling a protein structuring module that is mechanically robust. A further advantage of this method is that the protein structuring module can be easily taken apart for cleaning by detaching the two solid parts of the protein structuring module. By detaching the two solid parts, the interior of the protein structuring module, which is exposed to the protein constituent during use, is made directly accessible for cleaning. Moreover, after cleaning, the protein structuring module is easily reassembled by connecting the two solid parts again. This allows the down time of the protein structuring module, in which it is not used because of cleaning, to be minimized, thereby maximizing the time during which the module can be used.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figure 1 schematically illustrates an arrangement comprising three protein structuring modules in accordance with an embodiment of the invention.
Figure 2 schematically illustrates three protein structuring modules in accordance with embodiments of the invention
Figure 3 schematically illustrates three protein structuring modules in accordance with further embodiments of the invention.
Figures 4A-4D schematically illustrate a protein structuring module in accordance with a further embodiment of the invention.
Figure 5 schematically illustrates an arrangement comprising protein structuring modules in accordance with a further embodiment of the invention.
Figure 6A-6B schematically illustrates a protein structuring module in accordance with a further embodiment of the invention.
Figure 7 schematically illustrates three protein material outlets of a protein structuring module in accordance with a further embodiment of the invention.
Figure 8 schematically illustrates a method of manufacturing a protein structuring module in accordance with an exemplary implementation of the teachings and described concept of this document.
Figure 9 schematically illustrates a providing system in accordance with an embodiment of the invention.

### Detailed description

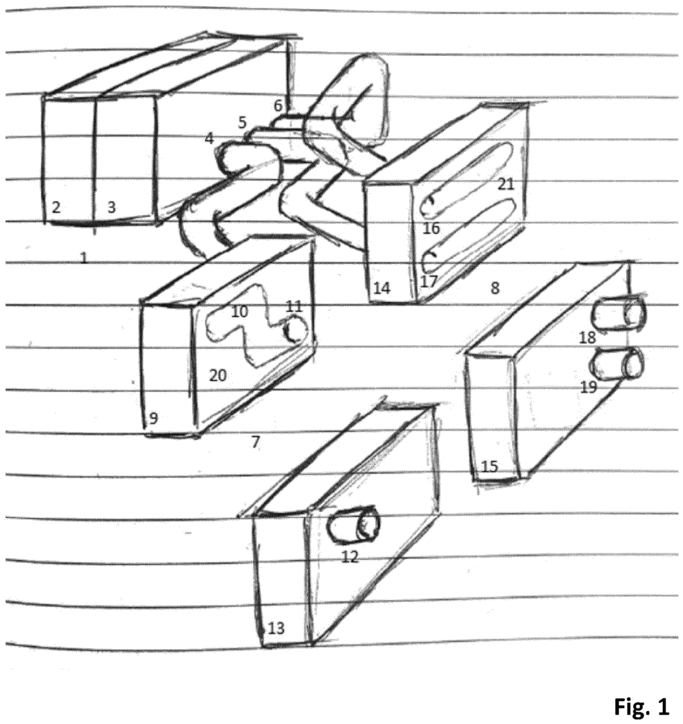

Figure 1 schematically illustrates an arrangement comprising three protein structuring modules in accordance with an embodiment of the invention. In the arrangement, a protein structuring module 1 is upstream of two further protein structuring modules 7 and 8. The protein structuring module 1 comprises solid part 2 and solid part 3, which comprises outlets 4-6. Via outlet 4, a protein substance is led to protein material inlet 11 on solid part 9 of protein structuring module 7. The protein substance, in accordance with the invention, includes a structured protein material. When solid parts 9 and 13 are detachably connected along contact surface 20, the protein constituent is led via the shear channel of protein structuring module 7, defined by groove 10, to outlet 12. As the protein constituent moves through the shear channel, it is subjected to shear stresses, which are necessary for structuring the molecules in order to obtain the desired properties.

Similarly, via outlets 5 and 6, the protein substance is led to inlets 116 and 17 on solid part 14 of protein structuring module 8, where it is subjected to further processes as a protein constituent. When solid parts 14 and 15 are detachably connected along contact surface 21, the protein constituent is led via the shear channels of protein structuring module 8 to outlets 18 and 19.

Protein structuring module 8 comprises two shear channels, while protein structuring module 7 comprises only one shear channel. Moreover, the shear channel of module 7 follows a path defined in a different way than the paths followed by the shear channels of module 8. As a consequence of how these paths are defined, while the exteriors of the modules 7 and 8 may not differ significantly, the outlets 12, 18, and 19 are located on spots of the solid parts 13 and 15. It may also be appreciated that alternative embodiments of such an arrangement could include any number of protein structuring modules, including only a single one. Moreover, the single module in such an alternative embodiment could comprise any number of shear channels, including only a single one.

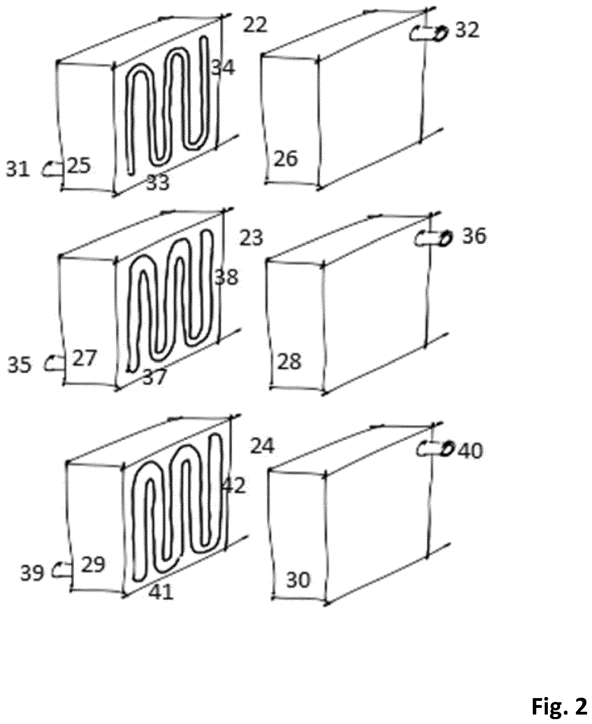

Figure 2 schematically illustrates three embodiments of a protein structuring module, wherein the solid parts are provided with grooves having different widths. The three protein structuring modules 22-24 respectively comprise first and second solid parts 25 and 26, 27 and 28, and 29 and 30. Furthermore, the modules respectively contain inlets 31, 35, and 39, and outlets 32, 36, and 40. Moreover, contact surfaces 33, 37, and 41 are respectively provided with grooves 34, 38, and 42, for defining shear channels of the modules. These grooves are drawn in the figure to follow an arbitrary path, as can be defined in accordance with the requirements of the user. Furthermore, each of the grooves 34, 38, and 42 is drawn to be successively wider than the previous. In shear channels with different widths, a protein constituent flowing through them will be subjected to different shear stresses. Any of the solid parts can be quickly and easily replaced with another solid part, so as to adapt to changes in the process.

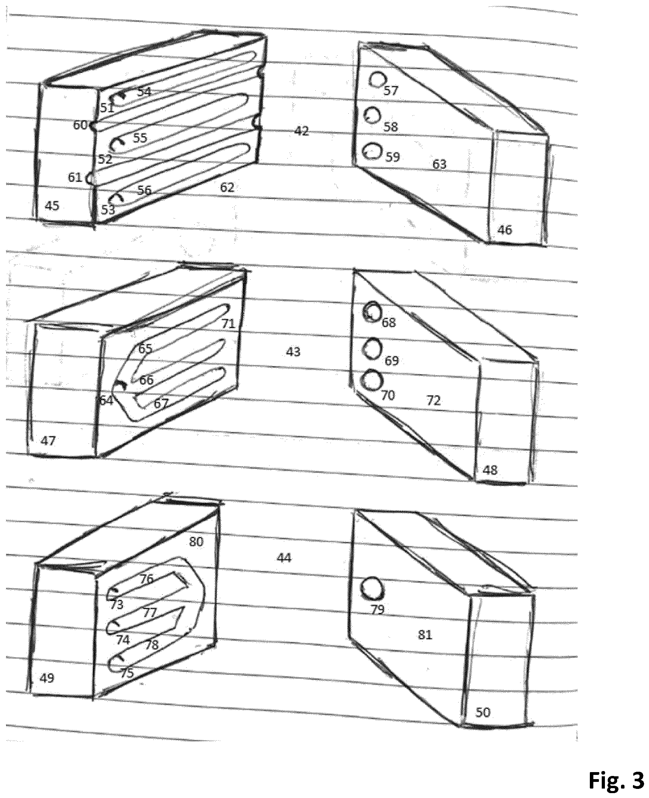

Figure 3 schematically illustrates three further embodiments of a protein structuring module in accordance with the invention. In the first module 42, contact surface 62 of solid part 45 is provided with three grooves 54-56 and inlets 51-53. Additionally, contact surface 62 is provided with two recesses 60 and 61 for the insertion of a heating or cooling means for heating or cooling the protein material. In this embodiment, the recesses 60 and 61 take the form of additional grooves in the contact surface 62. The grooves are evenly spaced between the grooves 54-56, so that the protein constituent flowing through the shear channels would be cooled uniformly along the groove lengths. In this case, the cooling means would likely include a cooling fluid flowing through the recesses. However, it may be appreciated that in different embodiments the recesses could take different forms and would lend themselves to different cooling means. Contact surface 63 of solid part 46 is provided with three outlets 57-59. When the solid parts 45 and 46 are detachably connected along contact surfaces 62 ad 63, outlets 57-59 will be respectively connected to grooves 54-56, so as to define three separate shear channels of the module 42, each having a first open end and a second open end.

In the second module 43, contact surface 71 of solid part 47 is provided with an inlet 64, from which the groove branches off into three separate grooves 65-67. Contact surface 72 of solid part 48 is provided with three outlets 68-70. When solid parts 47 and 48 are detachably connected, outlets 68-70 are connected to grooves 65-67, such that the connected contact surfaces 71 and 72 define a shear channel having an inlet 64, branching into three separate channels that share the inlet 64, but each of which has its own outlet 68, 69, or 70. The three separate shear channels of module 42 could have different lengths or widths, so as to subject the protein constituent flowing through them to different shear stresses for different amounts of time. Alternatively, protein structuring module 43 could be part of an arrangement similar to the one shown in figure 1, so that the protein substance is led from protein material outlets 68-70 to protein structuring modules further downstream as a protein constituent to be further processed, in which the protein constituent can similarly experience different flow parameters.

In the third module 44, contact surface 80 of solid part 49 is provided with three inlets 73-75, leading into grooves 76-78. Contact surface 81 of solid part 50 is provided with a single outlet 79. When the solid parts 49 and 50 are detachably connected along contact surfaces 80 and 81, outlet 79 is connected to the point at which the three grooves 76-78 branch to unite, such that the two contact surfaces 80 and 81 define three channels, respectively comprising inlets 73-75, but which branch to form a single channel further downstream, having a single outlet 79. Similarly to in module 43, the three separate shear channels of module 44 could have different lengths or widths, so as to subject the protein constituent flowing through them to different shear stresses for different amounts of time. Alternatively, protein structuring module 44 could be part of an arrangement similar to the one shown in figure 1, so that the protein substance is led from protein material outlet 79 to a protein structuring module further downstream as a protein constituent to be further processed, in which the protein constituent can similarly experience different flow parameters. Conceivably, module 43 could be placed directly downstream of module 44, or vice versa, in such an arrangement.

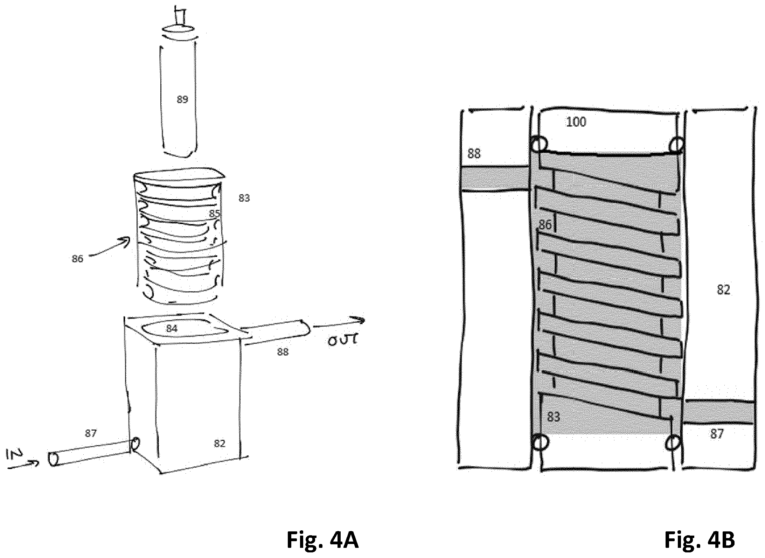

Figures 4A and 4B schematically illustrate a further embodiment of a protein structuring module, wherein the contact surfaces of the two solid parts are concentric cylindrical surfaces. Contact surface 84 of solid part 82 defines an interior wall of a cavity. The cavity is accessible for insertion of the second solid part 83 therein. The contact surface 85 of the second solid part 83 forms an exterior surface thereof, wherein the contact surfaces 84 and 85 of the first and second solid parts 82 and 83 are correspondingly shaped such as to be contiguous to each other when the first and second solid parts 82 and 83 are detachably connected. Furthermore, the second solid part 83 in this embodiment is additionally provided with a cavity 831, which is accessible for insertion of a heating means 89. In this case the side of the heating means 89 is shaped to be a concentric cylindrical surface, such that the heating means 89 when inserted into the second solid part 83, has a uniform distance from the shear channel along the channel length. In this way, the protein constituent flowing through the shear channel is heated evenly along its path. The contact surface 85 of the second solid part 83 is provided with a groove 86 running along the contact surface, such that when the solid parts 82 and 83 are detachably connected, the contact surfaces 84 and 85 define a shear channel having a first open end 87, defining an inlet, and a second open end 88, defining an outlet. Furthermore, the module is provided with a lid 100, serving to seal the system and to contain the pressures inherent to the protein structuring process.

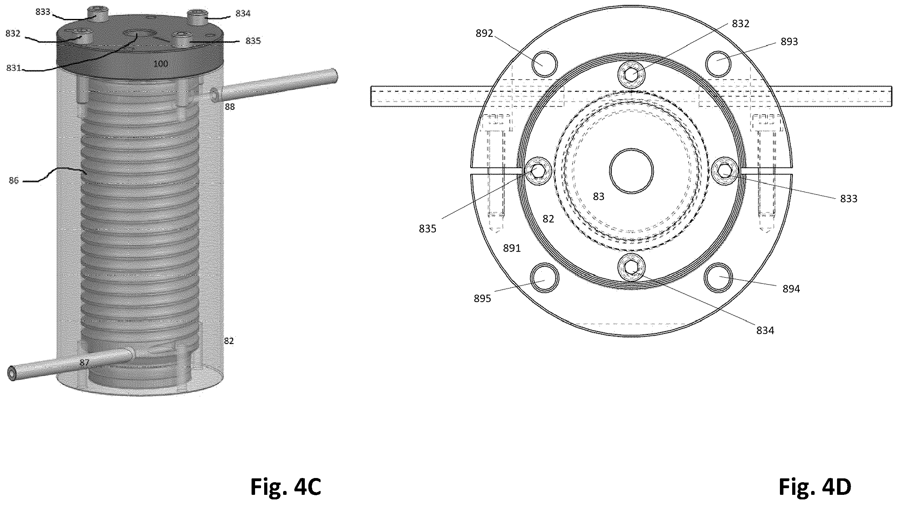

Figure 4C shows a computer-aided design (CAD) image of such an embodiment. In this figure, lid 100 is attached to solid part 82 with screws 832-835. Additionally, lid 100 comprises additional cavity 831 for insertion of a heating means or cooling means.

Figure 4D shows another version of these embodiments, wherein a heating or cooling means is positioned exterior to both solid parts 82 and 83. In this version, the module is provided with an exterior heat conduction part 891. The heat conduction part comprises materials with high heat conduction coefficients, which are at least higher than the heat conduction coefficients of solid part 82, and comprises cavities 892-895 for enabling insertion of heating or cooling means in each of said cavities. This embodiment may be preferred, because the heating or cooling means being positioned exterior to the channels, rather than interior, is more suitable for facilitating efficient heat transfer between the heating or cooling means and the protein material flowing through the channels. Furthermore, the positioning of the heating or cooling means exterior to the solid parts 82 and 83 improves the easiness of cleaning.

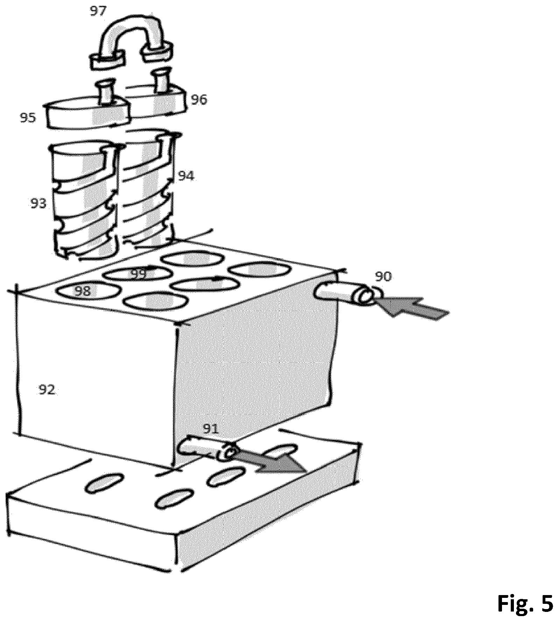

Figure 5 schematically illustrates an embodiment of an arrangement comprising protein structuring modules, wherein the contact surfaces of the two solid parts are concentric cylindrical surfaces. Contact surface 98 of solid part 92 forms an interior wall of a cavity, in which a second solid part 93 can be inserted. Contact surface 99 of solid part 92 forms an interior wall of a further cavity, in which a further second solid part 94 can be inserted. When the contact surfaces 98 and 99 of solid part 92 are respectively connected to the contact surfaces of solid parts 93 and 94, the module is further provided with lids 95 and 96 onto solid parts 93 and 94. In this embodiment, the lids 95 and 96 are both provided with an open end, via which the two shear channels defined by the grooves on the contact surfaces of solid parts 93 and 94 can be connected using an external tube element 97. In this way, a protein constituent entering the arrangement via inlet 90, can move through multiple channels in the arrangement before reaching outlet 91.

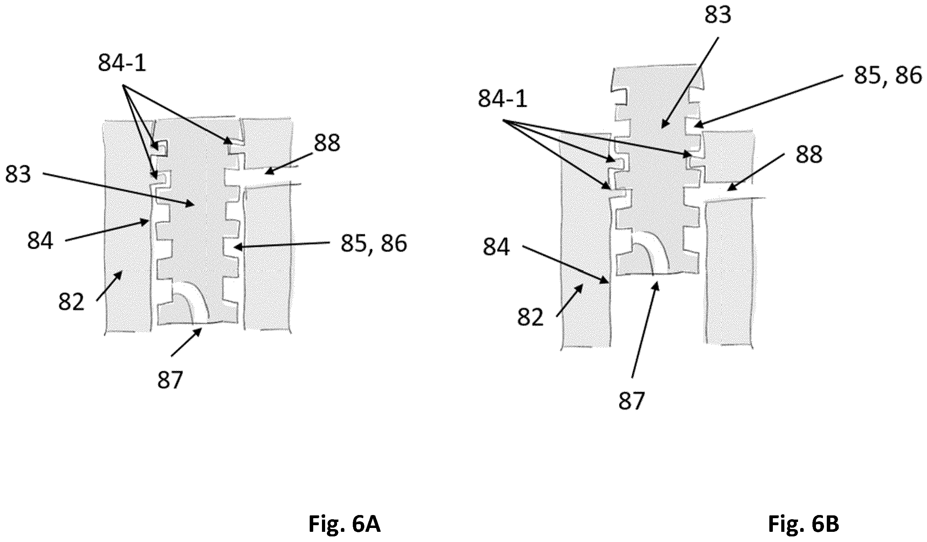

Figures 6A and 6B schematically illustrate a protein structuring module in accordance with a further embodiment of the invention, wherein the contact surfaces of the two solid parts are concentric cylindrical surfaces. Contact surface 84 of solid part 82 defines an interior wall of a cavity. The cavity is accessible for insertion of the second solid part 83 therein. The contact surface 85 of the second solid part 83 forms an exterior surface thereof, wherein the contact surfaces 84 and 85 of the first and second solid parts 82 and 83 are correspondingly shaped such as to be contiguous to each other when the first and second solid parts 82 and 83 are detachably connected. The interior wall 84 is further provided with a protruding element 84-1 for forming an internal screw thread. The groove 86 runs along a spiraling path across contact surface 85 and serves to form an external screw thread thereon. The internal and external screw threads are complementary to each other and enable the second solid part 83 to be screwed into the first solid part 82. Insertion in this way may be performed along the full length of the second solid part 83 (as shown in figure 6A), or alternatively may be performed partially along only a portion of the length of the second solid part 83 (as shown in figure 6B), while remaining fully functional. Partial insertion may be done if a shear channel having a shorter length is desired. Protruding element 84-1 is positioned on the interior wall 84 between the reception opening and the inlet 88, such that in use a protein constituent is forced to flow between the inlets 87 and 88. In particular, a protein constituent is prevented in this way from flowing out of the module through the portion of the groove 86 that is exposed because of a partial insertion of the second solid part 83 into the first solid part 82. Moreover, inlet 87 is located on the second solid part 83 and inlet 88 is located on the first solid part 82. In alternative embodiments, inlet 88 may be located on the second solid part 83 and inlet 87 may be located on the first solid part 82.

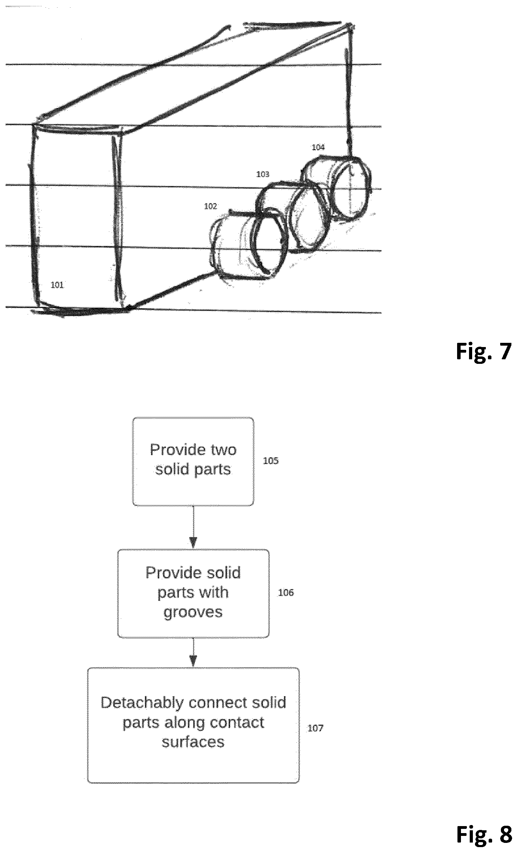

Figure 7 schematically illustrates three outlets 102-104 on a solid part 101 of a protein structuring module, wherein the outlets 102-104 are located adjacent to each other. In this embodiment, the strands exiting outlets 102-104 of a protein structuring module comprising such a solid part 101 will define a slab-like structure of protein substance.

Figure 8 schematically illustrates the method of manufacturing a protein structuring module. The method involves the step 105 of providing a first solid part and a second solid part, wherein the first solid part and second solid part can be detachably connected to each other along at least one contact surface of the first solid part and at least one contact surface of the second solid part. The method further involves the step 106 of providing at least one of said contact surfaces of either the first and the second solid part with a groove running across the at least one contact surfaces, such that the contact surfaces of the connected first and second solid parts define a first shear channel of the cell, having a first open end and a second open end, running along the groove between the two contact surfaces, wherein the first and second open ends of the shear channel define an inlet and an outlet of said first shear channel. The method further involves the step 107 of detachably connecting the first and second solid parts along at least one contact surface of the first solid part and at least one contact surface of the second solid part.

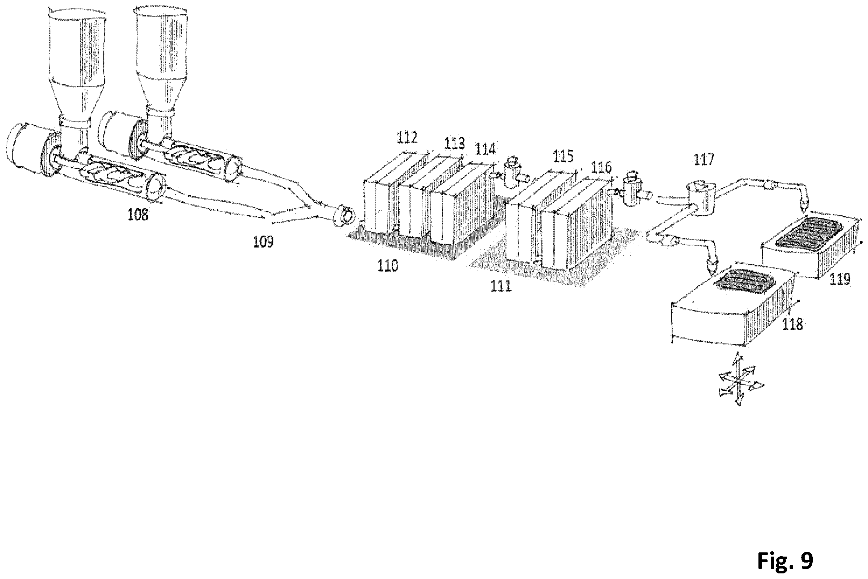

Figure 9 schematically illustrates a providing system 200 in accordance with an embodiment of the present invention. In the providing system 200, one or both containment barrels 202-1 and 202-2 hold a protein constituent including a protein material. This may be an unstructured protein material or a material wherein protein molecules may be formed by a suitable (pre-)process. In the present description, for a clear explanation of the invention, it will be assumed that the protein constituent includes an unstructured protein material, wherein the molecules need to be structured in a proper manner and the material requires to be processed in order to obtain a desired food product (e.g. a meat substitute or product thereof: a burger, minced meat-like product, a steak, chicken-like filet, etc.). The other containment barrel, e.g. 202-2 if it does not contain the same liquid substance as barrel 202-1, may include a further substance. For example, this could be a specific additional ingredient (spices, oil, water, fat, sauces, powdered or granulated food ingredients, suspensions, pastes, spirits, etc.) or auxiliary material, or different protein material, allowing mixtures of specific ratios of the two protein formulations to be created.

The providing system 200 includes a pump system 108, in the present embodiment formed by two extruders 205-1 and 205-2 which are respectively connected to the barrels 202-1 and 202-2. The barrels 202-1 and 202-2 are via the pump system 108 connected to a system supply line 109. The pump system 108 thereby provides the protein constituent (with or without additional ingredients) to the protein structuring modules 112-116, and subsequently to printing platforms 118 and 119 for depositing the structured protein substance after it has been subjected to heat and shear stress in the protein structuring modules 112-116. The embodiment of figure 9 includes several protein structuring modules 112-116 that provide various functions in order to process the protein constituent prior to deposition thereof. In principle, a single protein structuring module (e.g. 112) would be sufficient in a basic embodiment of the providing system, wherein this single protein structuring module could be configured for heating the protein constituent, aligning the molecules using shear stress (by the flow dynamics) and optionally cooling thereof. In other embodiments, such as the embodiment of figure 9, several protein structuring modules 112-116 are applied. The modules 112 through 116 have been divided into a heating section 110 and a cooling section 111.

In the figure, the protein constituent flows from the pump 108 via a mixing unit 109 to the heating section 110. In the heating section, the protein structuring modules 112-114 are provided with heating means for heating the protein constituent as it flows through the shear channels of the modules. These heating means could be similar to the heating means 89 described above, or may include other heating means. For example, instead of or in addition to a heating cavity such as cavity 831, a heat exchanger channel may be included in one or more of the modules 112 to 114. In this embodiment, the heating section 110 comprises three protein structuring modules 112-114, but it may be appreciated that in alternative embodiments such a heating section could contain any other number of modules.

Furthermore, the dimensions of the material passage in modules 112 to 114 determines the flow properties and the achievable heat transfer. In the providing system 200 of this embodiment, due to the internal diameter of the passage typically being in the order of millimeters or tens of millimeters, the desired flow velocity and the viscosity of the protein constituent, the flow properties are preferably such that the flow will be a laminar flow at any time. This is also desired in order to obtain the desired amount of shear needed for structuring the molecules of the of the protein material in the protein constituent. The material passage for example may have an internal diameter smaller than 10 millimeter, preferably smaller than 8 millimeter, and more preferable between 2 millimeter and 5 millimeter. For example, the material passage may have an internal diameter of 3 millimeter. These dimensions are, however, merely exemplary and different diameters may be desired dependent of the circumstances, such as the type of protein constituent or the amount of applied heat. By no means are these intended to confine practicing the described notion to a specific dimension, because as will be understood such dimensions (and many other parts of this description) do not form an essential element of implementing these teachings to achieve its effects.

After the protein constituent has been subjected to heat in the heating section 110, so as to enable it to be restructured by shear stresses applied to the constituent in the shear channels, the substance flows to a cooling section 111 as a protein constituent to be further processed, the cooling section comprising two additional protein structuring modules 115 and 116. In this cooling section, cooling means, such as cooling means provided to the protein structuring modules discussed above, are used to bring the temperature of the protein constituent back to a level close to its temperature before entering the heating section 110. The restructured protein substance is then led via a two-way valve to printing platforms 118 and 119, where the material is deposited.

The printing platforms 118 and 119 may include outlets 210-1 and 210-2 for dispensing the substance in an end product. The outlets 210-1 and 210-2 may be a standard tube ends or may comprise a suitably shaped nozzles. Furthermore, in order to print more complex structures, the outlets 210-1 and 210-2 may optionally be rotatable and/or controllable (for example with a system controller and one or more actuators (not shown)). The end product may be a burger, a minced meat-like substance, a steak-like product, a chicken-like product (or other poultry), a fish-like structured substance or any other desired similar sort of food product. To obtain such a product, the providing system 200 may optionally include XYZ movable types of printing platforms, i.e. that can be moved in the directions indicated by the arrows in figure 9. Alternatively, the platforms 118 and 119 may be movable in only the X or Y direction or the X and Y direction, or alternatively the platforms 118 and 119 are immobile or static. Some of the desired relative motion between the outlets 210-1 and 210-2 on one hand and the corresponding platforms on the other hand, may be obtained by moving the outlets 210-1 and 210-2 instead of or in addition to the platforms. Once the deposition on one stage is finished, the valve 117 may switch to the other nozzle so that the flow can continue. In this way, heated protein constituents inside channels can keep flowing at a constant rate, which keeps the heating uniform. This prevents an inhomogeneous composition of deposited protein substance, and also prevents overheating and consequent degradation of the constituent.

The present invention has been described in terms of some specific embodiments thereof. It will be appreciated that the embodiments shown in the drawings and described herein are intended for illustrated purposes only and are not by any manner or means intended to be restrictive on the invention. It is believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. Moreover, any of the components and elements of the various embodiments disclosed may be combined or may be incorporated in other embodiments where considered necessary, desired or preferred, without departing from the scope of the invention as defined in the claims.

In the claims, any reference signs shall not be construed as limiting the claim. The term 'comprising' and `including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Any of the claimed or disclosed devices or portions thereof may be combined together or separated into further portions unless specifically stated otherwise, without departing from the claimed invention. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the spirit and scope of the invention, as is determined by the claims. The invention may be practiced otherwise then as specifically described herein, and is only limited by the appended claims.

## Claims

1. Protein structuring module for use in an arrangement for providing a structured protein substance for manufacturing of a food product, wherein the module comprises an inlet for receiving a protein constituent, an outlet for providing a structured protein substance including a structured protein material, and a conduit between the inlet and the outlet of the protein structuring module,
wherein the protein structuring module is configured for establishing a shear stress in the protein constituent for unfolding and/or aligning molecules of the protein constituent, such as to form said structured protein material, wherein at least a part of the conduit is formed by a first shear channel, the protein structuring module therefore comprising a first solid part and a second solid part, wherein the first solid part and second solid part are detachably connected to each other along at least one contact surface of the first solid part and at least one contact surface of the second solid part,
wherein at least one of said contact surfaces of either the first and the second solid part comprises a groove running across the at least one contact surfaces, such that the contact surfaces of the connected first and second solid parts define the first shear channel running along the groove between the two contact surfaces, the first shear channel having a first open end and a second open end, wherein the first open end of the first shear channel defines the inlet of the protein structuring module and the second open end of the first shear channel defines the outlet of the protein structuring module.

2. Protein structuring module according to claim 1, wherein at least one of said contact surfaces comprises one or more additional grooves, each additional groove running across the at least one of said contact surfaces, such that the two contact surfaces of the attached solid parts define one or more separate, additional shear channels of the protein structuring module, separate from the first shear channel.

3. Protein structuring module according to claim 2, wherein at least one of:
each additional shear channel comprises a further first open end, wherein each further first open end of each shear channel defines a further inlet of the module; or
at least one of said one or more additional grooves branches off from another one of said grooves, such that the grooves together share a first open end, such as to share the inlet of the module.

4. Protein structuring module according to any of claims 2 or 3, wherein at least one of:
each additional shear channel comprises a further second open end, wherein each further second open end of each shear channel defines a further outlet of the module; or
at least one of said one or more additional grooves branches with another one of said grooves, such that the grooves together share a second open end, such as to share the outlet of the module.

5. Protein structuring module according to claim 4, wherein at least two of the outlets of the module are located adjacent to each other on the module, such that the strands of structured protein substances provided by the adjacent outlets form a slab of structured protein substance.

6. Protein structuring module according to any of the preceding claims, wherein the contact surface of the first solid part defines an interior wall of a cavity, the cavity being accessible through a reception opening for enabling the second solid part to be inserted into the cavity, wherein the contact surface of the second solid part forms an exterior surface thereof, and wherein the contact surfaces of the first and second solid parts are correspondingly shaped such as to be contiguous to each other when the first and second solid parts are detachably connected.

7. Protein structuring module according to claim 6, wherein the contact surfaces of the first and second solid parts form at least one of a group comprising: concentric cylindrical surfaces, spherical surfaces, and polynomial surfaces.

8. Protein structuring module according to any of the preceding claims, wherein at least one of the first and second solid part comprises one or more recesses for enabling insertion of one or more heating means for heating the protein material.

9. Protein structuring module according to any of the preceding claims, wherein at least one of the first and second solid part comprises one or more recesses for enabling insertion of one or more cooling means for cooling the protein material.

10. Protein structuring module according to any of the claims 8 or 9, wherein said recesses are located on the at least one of the first and second solid part, such that the heating means or the cooling means has a distance from the shear channels that is uniform along the length of each shear channel.

11. Protein structuring module according to claim 6 or 7, further comprising a heat conduction part, the heat conduction part being detachably connected to the first solid part along at least one further contact surface of the first solid part, the further contact surface forming an exterior surface thereof, and at least one contact surface of the heat conduction part, the at least one contact surface forming an interior surface thereof, and wherein the further contact surface of the first solid part and the at least one contact surface of the heat conduction part are correspondingly shaped such as to be contiguous to each other when the first solid part and heat conduction part are detachably connected,
wherein the heat conduction part comprises one or more recesses for enabling insertion into each of said recesses of either:
a heating means for heating the protein constituent, or a cooling means for cooling the protein constituent.

12. Protein structuring module according to claim 6, wherein the interior wall comprises a protruding element at the reception opening for forming an internal screw thread, wherein either one of:
- the first open end is provided at the interior wall in the extended direction from the reception opening to the protruding element and the second open end is provided at the exterior surface; or
- the first open end is provided at the exterior surface and the second open end is provided at the interior wall in the extended direction from the reception opening to the protruding element,
wherein the groove is provided across the exterior surface, such as to run along a spiraling path for forming an external screw thread complementary to the internal screw thread, such as to enable the second solid part to be at least partially inserted into the cavity by means of a screwing motion.

13. Arrangement for providing a structured protein substance for manufacturing a food product, wherein the structured protein substance includes structured protein material, the arrangement comprising a protein structuring module according to any of the preceding claims,
wherein the protein structuring module comprises a first solid part and a second solid part, wherein the first solid part and second solid part are detachably connected to each other along at least one contact surface of the first solid part and at least one contact surface of the second solid part,
wherein at least one of said contact surfaces of either the first and the second solid part comprises a groove running across the at least one contact surfaces, such that the contact surfaces of the connected first and second solid parts define a first shear channel running along the groove between the two contact surfaces, the first shear channel having a first open end and a second open end, wherein at least one of the first and second open ends of the first shear channel defines at least one of the inlet and the outlet of the protein structuring module.

14. Arrangement according to claim 13, the arrangement comprising a plurality of *N* protein structuring modules, *N* being an integer greater than 1, wherein the protein structuring modules are connected in sequence, such that for each *n* greater than 1 and up to *N,* each inlet of the *n*^{th} protein structuring module is connected to a single outlet of an upstream module.

15. Method of manufacturing a protein structuring module for use in an arrangement for providing a structured protein substance for manufacturing of a food product, wherein the structured protein substance includes a structured protein material,
the method comprising providing a first solid part and a second solid part, wherein the first solid part and second solid part can be detachably connected to each other along at least one contact surface of the first solid part and at least one contact surface of the second solid part,
the method further comprising providing at least one of said contact surfaces of either the first and the second solid part with a groove running across the at least one contact surfaces, such that the contact surfaces of the connected first and second solid parts define a first shear channel of the module, having a first open end and a second open end, running along the groove between the two contact surfaces, wherein the first and second open ends of the shear channel define an inlet and an outlet of said first shear channel,
the method further comprising detachably connecting the first and second solid parts along at least one contact surface of the first solid part and at least one contact surface of the second solid part.
